Europäisches Patentamt

European Patent Office

Office européen des brevets

(11) Publication number: **0 435 405 A1**

# EUROPEAN PATENT APPLICATION

(21) Application number: 90203456.0

(51) Int. Cl.5: **H02H 11/00**

(22) Date of filing: **20.12.90**

(30) Priority: **22.12.89 IT 2283089**

(43) Date of publication of application:
**03.07.91 Bulletin 91/27**

(84) Designated Contracting States:
**AT BE CH DE DK ES FR GB GR IT LI LU NL SE**

(71) Applicant: **TEUCO GUZZINI S.r.l.**
**Via Passionisti, 40**
**I-62019 Recanati (Macerata)(IT)**

(72) Inventor: **Guzzini, Virgilio**
**Via Duomo 13D**
**I-62019 Recanati (Macerata)(IT)**

(74) Representative: **Faraggiana, Vittorio, Dr. Ing.**
**Ingg. Guzzi e Ravizza S.r.l. Via Boccaccio, 24**
**I-20123 Milano(IT)**

(54) Electronic safety device for connections to earth.

(57) A safety device (10) comprises cutout means (23, 24) for automatically disconnecting an electrical appliance (11) from the power line (12, 13) supplying power to it. An electric signal generator (19) and a detector (21) of said electric signal are connected in series with the interposition of coupling transformers (17 and 18). The series is connected, with condensers (15, 16), between the conductors (12, 13) of the power line and the earth connection (14) of the appliance (11), so that the path of the signal between the generator (19) and the detector (21) is substantially closed by the electrical impedance between the earth connection (14) and the earth reference (26) of the source of power (25).

When the incoming signal to the detector is of an amplitude smaller than a predetermined value, the signal detector (21) commands the cutout means (23, 24) to disconnect the appliance (11) from the power line (12, 13).

Fig.1

EP 0 435 405 A1

## ELECTRONIC SAFETY DEVICE FOR CONNECTIONS TO EARTH

One of the main methods of safeguarding users of electrical appliances fed by an electrical distribution network consists of connecting the metal parts of such appliances to an earth connection. This solution however is only effective if the earthing system is carried out properly so as to ensure that any stray currents on the metal structure of the appliance are dispersed to earth. This gives rise to the problem of a lack of safety if, for any reason whatsoever, the connection to earth should become inefficient to a certain extent or even completely non-existent, for example due to an interruption in the connecting conductor. The danger of such a situation also lies in the fact that the interruption or inefficiency cannot, in the known technique, be detected except by means of tests carried out directly by a technician, which are usually carried out very infrequently, or even not at all.

An appliance with a deficient or no earth connection can therefore remain in use for long periods of time, with the danger of the insulation between the metal structure within reach of the user and internal electrical connections giving way and causing an electric shock. The general scope of this invention is to obviate the aforementioned problems by providing a device which monitors the efficiency of the earth connection for an electrical appliance and switches off the power supply to the latter in the event of an imperfect connection. This scope is achieved, according to the invention, by providing an electronic safety device comprising cutout means for automatically disconnecting an electrical appliance from the power line supplying power to it, characterized by the fact of comprising sensors for measuring the electrical impedance between the earth connection of the appliance and an earth reference considered substantially ideal, said sensors comparing the measured impedance value with a predetermined impedance value and generating a control signal to activate said cutout means whenever the measured impedance value is higher than said predetermined impedance value. The innovatory principles of this invention and its advantages with respect to the known technique will be more clearly evident from the following description of a possible exemplificative embodiment applying such principles, with reference to the accompanying drawings, in which:

- figure 1 shows a block diagram of a safety device, according to the invention, monitoring the efficiency of the earth connection of an electrical appliance;
- figure 2 shows a possible circuit embodying the device of figure 1.

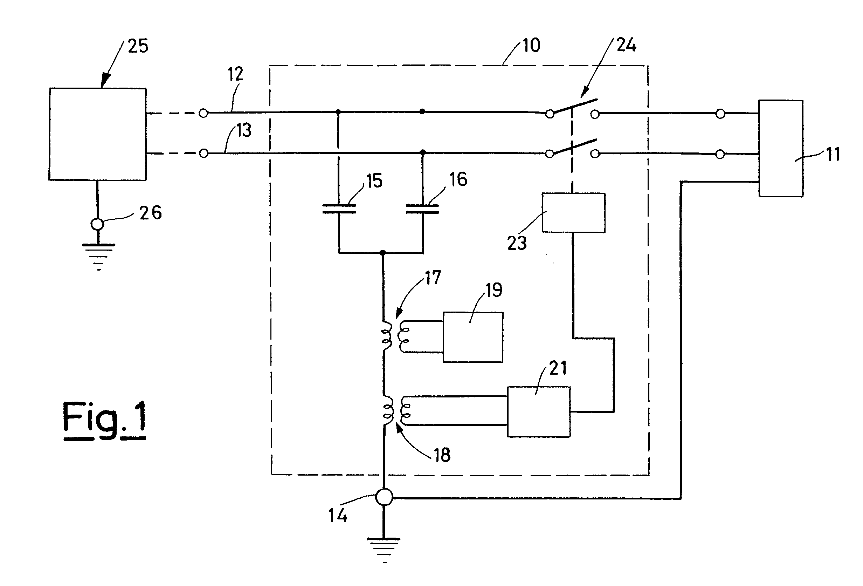

With reference to the figures, as can be seen in figure 1, a safety device 10 of the earth connection 14 (for example the earth connection of a building) of a generic electrical appliance 11 comprises an electromechanical actuator 23 to control the opening of contacts 24 disconnecting the appliance 11 from power conductors 12 and 13 forming an electric line coming from a source of power 25 (for example a transformer room of the electric network) which has a decidedly efficient earth connection 26.

According to the innovatory principles of this invention, the device 10 comprises a signal generator 19 disposed in series with a signal detector 21, with interposition of their respective separation transformers 17 and 18. The series thus obtained is connected on one side, by means of decoupling condensers 15 and 16, to the line 12, 13, and on the other side to the earth connection 14 to be monitored. The condensers 15 and 16 have a value such as to enable them to be considered circuits substantially open for the frequency of the line voltage, and circuits substantially closed for the frequency of the signal produced by the generator 19.

The detector 21 is syntonized so as to be activated only by the signal produced by the corresponding generator 19 and to consequently control the actuator 23.

For example, the detector 21 can be of the known phase-locked loop type (PLL) in order to achieve perfect syntony with the signal of the generator 19.

The detector 21 is adjusted to close, by means of the actuator 23, the contacts 24 only when the signal taken from the transformer 18 is of the same frequency as the generator 19 and with an amplitude larger than a predetermined threshold.

The device described above operates in the following way. If the earth connection 14 is efficient it can undoubtedly be considered to be connected electrically, by means of a low-impedance connection, to the earth reference 26, assumed by definition as the ideal earth connection. Said ideal earth connection is also the reference for the electric lines 12, 13 for the very nature of the definition of ideal earth connection (in particular, if the device 25 is a substation for transformation and distribution of electric power this reference is generally obtained by connecting the neutral cable to star point). The series circuit of the two transformers is consequently closed by the connection between the earth reference 26 and the earth connection 14 and the signal produced by the generator 19 can reach the detector 21 with a sufficient amplitude to ensure that the latter detects it and keeps the contacts 24 supplying power to the appliance 11 closed.

Since the electric signal, produced by the generator 19, is injected simultaneously on both conductors 12 and 13, through the two condensers 15, 16 of equal value, the result is that said signal produces in the appliance 11 and in any other equipment connected to the electric line, a substantially zero current. In this way, the operation of appliances powered by the lines 12, 13 is not influenced in any way whatsoever by the presence of the signal emitted by the generator 19.

If the earth connection 14 becomes defective, that is to say, if the impedance between points 26 and 14 rises above a predetermined value which is considered as no longer satisfactory as an effective earth protection, the signal picked up by the detector 21 decreases in amplitude to a value lower than said threshold previously set in the detector which consequently deactivates the actuator 23 by opening the contacts 24 and thus cutting off the power to the appliance 11.

Safety is thus guaranteed since the monitored appliance is only powered if the corresponding earth connection is efficient with reference to a substantially ideal earth. It is advantageously preferable for the detector 21 to make a distinction between the in-phase components and the wattless components of the signal produced by the generator 19 and circulating within the system, so that the component of the signal shifted out of phase by electrical capacities passing through towards earth is not picked up. It is thus possible to prevent closures of the power lines towards earth caused by capacitive losses in the system, for example due to network filters of known technique in appliances connected to the same power line as the device 10, from producing an error in the operation of the device, causing it to close the contacts 24 even in cases where there is no satisfactory earth connection.

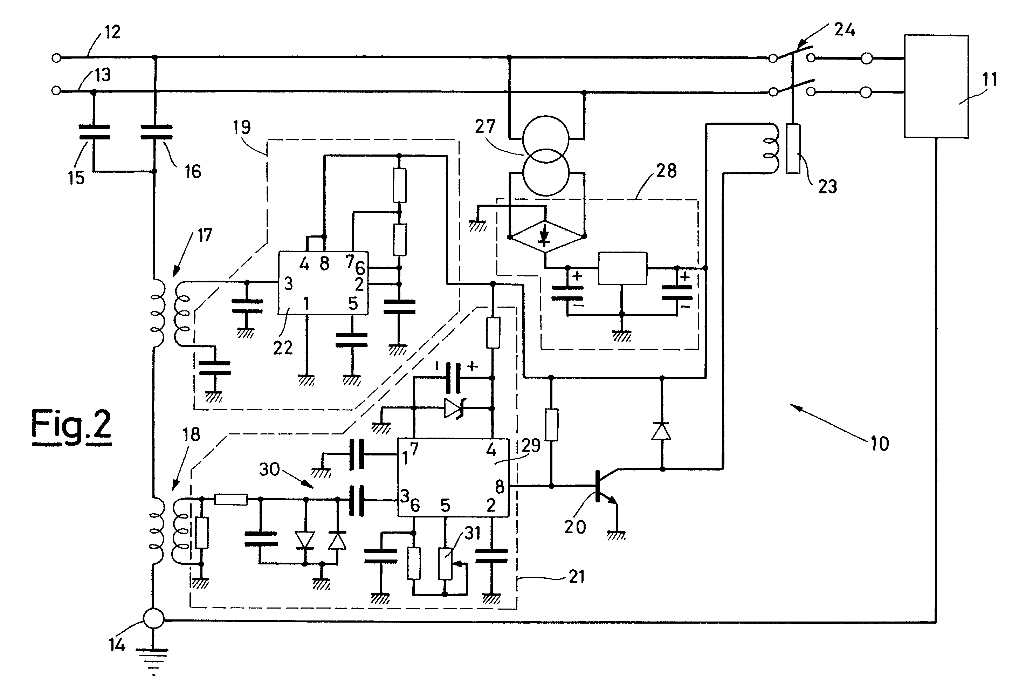

The innovatory principles of this invention will be even more clearly evident from the following brief description of an electric circuit made according to the block diagram of figure 1, with reference to the figure 2 in which the elements with functions identical to those of figure 1 are indicated with the same numbers as figure 1.

As can be seen in figure 2, the device 10 comprises a circuit 19 composed of an integrated circuit 22 and a set of passive components to form, for example, a 10KHz square wave signal generator.

The circuit 21 is in turn composed of an integrated circuit 29 which with its secondary passive components forms a PLL detector circuit whose outlet is connected to a buffer stage comprising a transistor 20 to operate the actuator 23 made in the form of a relay 23 with contacts 24.

The circuit 21 comprises an input portion 30 made with two push-pull diodes to eliminate any possible spurious pulses of overvoltage on the lines 12 and 13 which could damage the integrated circuit 29. Moreover, the PLL circuit comprises an adjustable control 31 in order to tune it onto the frequency produced by the generator 19 so as to make it insensitive to interferences on the line 12, 13. The electronic circuit of the device 10 is powered by the line 12, 13 through a voltage transformer 27, and a convertor stage 28 which converts it from alternating current to stabilized direct current.

It operates substantially similarly to that described with reference to figure 1, and in such a way that when the signal picked up by the circuit 21 is of a sufficient level to lock the PLL, the transistor 20 is conductive, thereby energizing the relay 23 which consequently powers the appliance 11.

When the signal picked up by the circuit 21 drops below the PLL locking threshold, the transistor 20 is excluded from the integrated circuit 29 and the relay is de-energized thereby disconnecting the appliance 11.

The foregoing description of an embodiment applying the innovatory principles of this invention is obviously given by way of example in order to illustrate such innovatory principles and should not therefore be understood as a limitation to the sphere of the invention claimed herein. For example, the actuator 23 can be a manual-reset release of the contacts 24 of a type similar to those used in differential safety switches.

The signal generator and associated detector can also be coupled to the electric line by methods other than by inductive coupling as is easily imaginable by the technician.

It is obviously also possible to provide an additional differential detector circuit of known technique to disconnect the power supply to the appliance 11 whenever an insulation failure occurs between power and earth. Said differential circuit can be a separate component or operate on the release of the actuator 23 of the device of this invention.

Moreover, the output of the detector could also be provided with an acoustic and/or luminous warning device which would come into operation in the event of a failure in the earth connection and disconnection of the appliance.

Although the safety device according to the invention is suitable for any type of appliance powered by the mains and requiring an earth connection, it is particularly useful in the case of appliances in which the lack of an earthing system gives rise to totally unacceptable risks for the user, such as for example electrically and electronically-controlled swirl baths, saunas, showers, etc.

Although a device connected to a single-phase power line is described herein, it is obviously possible to make a safety circuit according to the invention protecting appliances powered by any number of phases, such as for example three-phase, connecting condensers identical to the condensers 15 and 16 between the series of the generator and the detector and each conductor of the power line, as is easily imaginable by any technician.

## Claims

1. An electronic safety device comprising cutout means for automatically disconnecting an electrical appliance from the power line supplying power to it, characterized by the fact of comprising sensors for measuring the electrical impedance between the earth connection of the appliance and an earth reference considered substantially ideal, said sensors comparing the measured impedance value with a predetermined impedance value and generating a control signal to activate said cutout means whenever the measured impedance value is higher than said predetermined impedance value.

2. Device as claimed in Claim 1, characterized by the fact that said sensors comprise, disposed in series, an electric signal generator and a detector of said electric signal, their series being connected between at least one of the conductors of the power line and the earth connection of the appliance so that the path of the signal between the generator and the detector is substantially closed by the electrical impedance between the earth connection and the earth reference, the signal detector having an output for generating said signal controlling the cutout means, in order to disconnect the appliance from the power line when the incoming signal to the detector is of an amplitude lower than a predetermined value indicating that between the earth connection of the appliance and the earth reference there is an electrical impedance value higher than said predetermined impedance value.

3. Safety device as claimed in Claim 2, characterized by the fact that the signal generator and the detector are connected in said series with interposition of their respective decoupling transformers.

4. Safety device as claimed in Claim 2, characterized by the fact that said series is connected to the conductors of the line with interposition of a decoupling condenser for each conductor of the line.

5. Safety device as claimed in Claim 2, characterized by the fact that the detector is of the phase locked loop (PLL) type, tuned in to the frequency of the signal emitted by the generator.

6. Safety device as claimed in Claim 1, characterized by the fact that the cutout means comprise a relay.

7. Safety device as claimed in Claim 1, characterized by the fact that said cutout means comprise a manually reset cutout device.

8. Safety device as claimed in Claim 2, characterized by the fact that said detector comprises means for filtering and excluding from the detection signal components produced by the electrical signal generator which are shifted out of phase by passing through capacitive connection between the conductors of the line and the earth connection.

Fig.1

Fig.2

**European**
**Patent Office**

# EUROPEAN SEARCH
# REPORT

Application Number

## EP 90 20 3456

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 153 923   (R.G.GRAF)<br>* column 1, line 29 - column 1, line 61; figures 1-4 *<br>– – – | 1-8 | H 02 H<br>11/00 |
| X | US-A-4 368 498   (D.E.NEUHOUSER)<br>* the whole document *<br>– – – – – | 1-4,6-8 | |
| | | | **TECHNICAL FIELDS SEARCHED (Int. Cl.5)**<br><br>H 02 H |

The present search report has been drawn up for all claims

| Place of search | Date of completion of search | Examiner |
|---|---|---|
| Berlin | 21 March 91 | LEMMERICH J |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

    ............................................................................

& : member of the same patent family, corresponding
    document